# EUROPÄISCHE PATENTSCHRIFT

(11) **EP 2 138 528 B1**
(45) Veröffentlichungstag und Bekanntmachung des Hinweises auf die Patenterteilung: **20.08.2014**
(21) Anmeldenummer: 08104917.3
(22) Anmeldetag: 29.07.2008
(51) Int. Cl.: C08H 8/00, C12P 19/00, C12P 19/04, C08H 7/00

(54) **Verfahren zum Herstellen von Holz und/oder eines Holzwerkstoffes mit einem verringerten Gehalt an Holzextraktstoff und/oder VOC**
Method for producing wood and/or wood composite with a limited wood extract material and/or VOC content
Procédé de fabrication de bois ou de composite à base de bois ayant une teneur réduite en matériau d'extrait de bois et/ou VOC

(30) Priorität: 23.06.2008 EP 08011385
(43) Veröffentlichungstag der Anmeldung: 30.12.2009
(73) Patentinhaber: Fritz Egger GmbH & Co. OG, 3105 Unterradlberg (AT)
(72) Erfinder: Srebotnik, Ewald, 1220 Wien (AT); Ters, Thomas, 1130 Wien (AT)
(74) Vertreter: Cohausz & Florack

(56) Entgegenhaltungen:
- DE-A1- 19 820 947
- US-A1- 2003 186 036

## Beschreibung

Die Erfindung betrifft ein Verfahren zum Herstellen von Holz und/oder einem Holzwerkstoff mit einem verringerten Gehalt an Holzextraktstoff und/oder VOC. Die Erfindung betrifft ferner Holz oder einen Holzwerkstoff, der mit einem derartigen Verfahren hergestellt wird. Gegenstand der Erfindung ist ferner die Verwendung eines Enzym-Mediatorsystems, insbesondere eines Laccase-Mediatorsystems und/oder Lipoxidase zur Herstellung von Holz oder einem Holzwerkstoff mit einem verringerten Gehalt an Holzextraktstoff und/oder VOC.

Verfahren in denen der Gehalt an Holzextraktstoffen von Cellulose enthaltenden Materialien reduziert wird, sind grundsätzlich bekannt. Holzextraktstoffe stellen ein Gemisch aus verschiedenen Holzinhaltsstoffen dar, die in polaren und/oder apolaren organischen Lösungsmitteln und/oder Wasser löslich sind, beispielsweise in Wasser, Alkohol, Benzol, Hexan, Cyclohexan, Ether und/oder Aceton löslich sind. Die Holzextraktstoffe, die gewöhnlich etwa 3 % bis 10 % des Holzgewichts ausmachen, enthalten beispielsweise niedermolekulare Kohlenwasserstoffe, Terpene, aromatische und aliphatische Säuren, Alkohole, Tannine, Farbstoffe, Proteine, Alkaloide und lösliche Lignine.

Holzextraktstoffe spielen eine wesentliche Rolle bei der Verarbeitung von Holz zu Zellstoff sowie bei der Papierherstellung. So neigen lipophile Holzextraktstoffe, die hauptsächlich aus langkettigen Fettsäuren, Harzsäuren, Triglyceriden, Sterinen, Sterinestern, Wachsen und Fettalkoholen bestehen (D. Fengel und G. Wegener, Wood chemistry, ultrastructure, reactions. 1989, Berlin: Walter de Gruyter), zur Tröpfchenbildung. Diese Tröpfchen können sich dann im Zellstoff selbst oder im Abwasser akkumulieren. Darüber hinaus bilden sie klebrige Ablagerungen auf Papiermaschinen (E.L. Black und L.H. Allen, Pitch control, wood resin and deresination. 2000, Atlanta: Tappi Press).

Die vorgenannten Effekte sind als "pitch problems" bekannt und führen zu einer verringerten Lebensdauer von Maschinen sowie zu einer erhöhten Toxizität des Abwassers und zu einer verringerten Zellstoffqualität (W.E. Hillis und M. Sumimoto, Effect of extractive on pulping. Natural products of woody plants ii, ed. J.W. Rowe. 1989: Springer Verlag. 880-920). Neben lipophilen Verbindungen enthalten Holzextraktstoffe auch polare, hauptsächlich phenolische Verbindungen. Diese führen oft zu unerwünschten Verfärbungen in mechanischen Zellstoffen (J. Polcin und W.H. Rapson, Sapwood and heartwood of western hemlock and jack pine. Part ii. Heat stability of extractives, Canadian Pulp and Paper Magazine 1971, 72, 324-330).

Holzextraktstoffe wirken sich aber nicht lediglich bei der Zellstoff- und Papierherstellung negativ aus. So beeinflussen Holzextraktstoffe wesentlich die Eigenschaften von Materialien, die in der Holz verarbeitenden Industrie eingesetzt werden wie beispielsweise die Oberflächeneigenschaften des Holzes sowie dessen Trocknungs- oder Leimungsverhalten.

Es besteht folglich ein Bedürfnis, die Menge an Holzextraktstoffen in Holz (insbesondere Massivholz) und Holzwerkstoffen (insbesondere Holzstreifen, Holzspänen oder Holzfasern) beispielsweise für die Holzplattenherstellung zu reduzieren.

Das Vorkommen von Holzextraktstoffen in Cellulose enthaltenden Materialien ist aber auch aus weiteren Gründen nachteilig. So werden in der Wärme, beispielsweise in Trocknungsschritten, wie sie üblicherweise in der Holz verarbeitenden Industrie durchgeführt werden, die in den Holzextraktstoffen vorkommenden ungesättigten Verbindungen, beispielsweise Fette oder Harzsäuren, durch thermische Induktion oxidiert, wobei flüchtige organische Verbindungen (VOC) gebildet werden. Darüber hinaus führt insbesondere die Freisetzung kurzkettiger Aldehyde zur Entstehung eines unangenehmen Geruchs vom Endprodukt.

Auch aufgrund chemischen, insbesondere oxidativen, Abbaus von Holzextraktstoffen können VOC entstehen. Weitere Quellen für VOC sind der thermische und/oder chemische Abbau von Lignin, Hemicellulose bzw. Cellulose sowie von Harzen. Die Freisetzung von VOC wird ferner auch durch eine Vergrößerung der Partikeloberfläche bei der Verarbeitung von Cellulose enthaltenden Produkten begünstigt.

Neben bindemittelseitig verursachten Formaldehydemissionen spielen VOC-Emissionen eine zunehmende Rolle bei der Bewertung der Raumbelastungen von Bauteilen und Werkstoffen aus Cellulose enthaltenden Materialien. Problematisch ist hierbei insbesondere die Freisetzung von Monoterpenen, Sesquiterpenen, Phenolen (insbesondere Guajakol) sowie niedermolekularen aliphatischen Alkoholen und Aldehyden (insbesondere Hexanal und Heptanol), die von Cellulose enthaltenden Materialien emittiert werden. Die Emission von VOC unterliegt aufgrund befürchteter Gesundheitsgefährdungen zunehmend Restriktionen. Aus diesem Grund existiert ein großes Bedürfnis in der Holz-und Kunststoffindustrie, die VOC-Emissionen von Cellulose enthaltenden Produkten zu reduzieren.

Es sind eine Reihe physiko-chemischer Verfahren zum Entfernen von Holzextraktstoffen bekannt. In jüngerer Zeit wurden ferner verschiedene biotechnologische Verfahren, insbesondere unter Verwendung von Enzymen, als Alternative zu diesen Verfahren vorgeschlagen. Enzymatische Verfahren weisen den Vorteil auf, dass sie im Allgemeinen wesentlich selektiver sind, weniger unerwünschte Nebenprodukte liefern und üblicherweise unter wesentlich schonenderen Bedingungen durchgeführt werden können als physiko-chemische Verfahren. Dadurch kann die Bildung toxischer und anderer schädlicher Substanzen weitgehend vermieden werden. Außerdem vermeidet die Verwendung von Enzymen weitgehend den Einsatz von Schwermetallen wie Fe oder Cu als Katalysatoren.

In den biotechnologischen Verfahren werden üblicherweise Mikroorganismen oder von Mikroorganismen hergestellte Enzyme verwendet. So wurden beispielsweise albinotische Mutationen von *sap stain fungi* (hauptsächlich *Ophiostoma spp*.), die inzwischen im Handel erhältlich sind, und einige Weißfäulepilze (white rot fungi) im Hinblick auf ihre Fähigkeit, lipophile Verbindungen während der Lagerung abzubauen, getestet (M.J. Martinez-Inigo, et al., Time course of fungal removal of lipophilic extractives from eucalyptus globulus wood, Journal of Biotechnology 2000, 84, 119-126; M.J. Martinez-Inigo, et al., Biodegradability of extractives in sapwood and heartwood from scots pine by sapstain and white rot fungi, Holzforschung 1999, 53(3), 247-252; T.A. van Beek, et al., Fungal bio-treatment of spruce wood with trametes versicolor for pitch control: Influence on extractive contents, pulping process parameters, paper quality and efluent toxicity, Bioresource Technology 2007, 98, 302-311).

Auch die Behandlung von Zellstoff und Abwasser mit Enzymen zeigte vielversprechende Ergebnisse. So werden handelsübliche Lipasen seit den 90er Jahren bei der routinemäßigen Behandlung von mechanischem Weichholzzellstoff verwendet (K. Hata, et al., Mill-scale application of enzymatic pitch control during paper production. Enzymes for pulp and paper processing, ed. L. Viikari and T.W. Jeffries. Vol. 655. 1996: ACS. 280-296). Lipasen sind dazu fähig, die meisten Zellstofftriglyceride in wenigen Stunden zu hydrolisieren. Sie sind aber nicht dazu in der Lage, Sterolester und andere Pech bildende Substanzen abzubauen. Laccasen wurden auch zum Bleichen von verschiedenen Papierzellstoffen (H.P. Call and I. Mücke, History, overview and applications of mediated lignolytic systems, especially laccase-mediator-systems (lignozym-process), Journal of Biotechnology 1997, 53, 163-202), zur Modifikation von Holzfasern (C. Felby, J. Hassingboe, and M. Lund, Pilotscale production of fiberboards made by laccase oxidized wood fibers: Board properties and evidence for cross-linking of lignin, Enzyme and Microbial Technology 2002, 31(6), 736-741) und zur Funktionalisierung von Holzpartikeln (K. Fackler, et al., Laccase-catalyzed functionalization with 4-hydroxy-3-methoxybenzylurea significantly improves internal bond of particle boards, Holzforschung 2008, 62(2), 223) eingesetzt. Gutierrez et al. konnte zeigen, dass Laccase-Mediator-Systeme erfolgreich zum Entfernen von lipophilen Holzextraktstoffen in Zellstoff eingesetzt werden können (A. Gutierrez, et al., Enzymatic removal of free and conjugated sterols forming pitch deposits in environmentally sound bleaching of eucalypt paper pulp, Environ Sci. Technol. 2006, 40, 3416-3422; A. Gutierrez, et al., Main lipophilic extractives in different paper pulp types can be removed using the laccase-mediator-system, Biotechnology 2006, 72, 845-851).

Aus der DE 10 2006 057 566 A1 ist ein Verfahren zur Herstellung eines emissionsreduzierten Rohstoffs bekannt, der aus lignozellulosen Partikeln oder deren chemischen Hauptbestandteilen besteht oder diese als Komponente enthält. Es wird eine enzymatisch katalysierte Reaktion ggf. in Anwesenheit von Tensiden durchgeführt; wobei geruchs- und emissionsrelevante Stoffe der Rohstoffpartikel vernetzt oder abgebaut werden. Durch eine anschließende Entwässerung der Suspension werden niedermolekulare Bestandteile sowie die Enzyme wieder entzogen.

Nachteilig an den bekannten Verfahren zum Reduzieren des Gehalts an Holzextraktstoffen ist, dass sie unter Bedingungen durchgeführt werden, wie sie für einfache enzymatisch katalysierte Reaktionen typisch sind. So wird beispielsweise in den bekannten enzymatischen Verfahren eine vergleichsweise große Menge an Oxidationskatalysator und/oder Mediator bzw. Hilfsstoffen eingesetzt. Üblich sind Mengen von mindestens 0,02 Gew.% Katalysator und/oder 1 Gew.% Mediator bezogen auf die Gesamtmenge an Rohstoff-Trockensubstanz. Somit verbleibt bei den bekannten Verfahren eine vergleichsweise große Menge an Katalysator und ggf. Mediator bzw. Hilfsstoff in den behandelten Holzmaterialien. Der Verbleib dieser Substanzen in den Holzmaterialien ist aber deshalb unerwünscht, weil sich ihre Gegenwart negativ auf die Verarbeitungseigenschaften, wie beispielsweise Verleimbarkeit auswirkt. Um dies zu vermeiden müssen in den bekannten Verfahren Katalysator und ggf. Hilfsstoff bzw. Mediator in einem weiteren Schritt abgetrennt werden, was mit einem gesteigerten verfahrenstechnischen Aufwand verbunden ist.

Der Erfindung lag die Aufgabe zugrunde, ein Verfahren der eingangs genannten Art bereitzustellen, das die vorgenannten Nachteile nicht aufweist.

Diese Aufgabe wird erfindungsgemäß durch ein Verfahren zum Herstellen eines Materials auf Basis von von Holz und/oder einem Holzwerkstoff mit einem verringerten Gehalt an Holzextraktstoff und/oder VOC gelöst, in dem das Holz und/oder einem Holzwerkstoff mit einem Oxidationskatalysator behandelt wird, um eine autokatalytische Oxidationsreaktion zu initiieren.

Unter der Initiierung einer autokatalytischen Oxidationsreaktion wird erfindungsgemäß insbesondere die Wahl von einer oder mehreren Reaktionsbedingungen verstanden, wie sie in den abhängigen Patentansprüchen 2, 4, 7, 10, 12 und/oder 14 definiert sind.

Unter dem Begriff Holzextraktstoff werden erfindungsgemäß ein/oder mehrere Holzinhaltsstoffe verstanden, die mit polaren und/oder apolaren organischen Lösungsmitteln und/oder Wasser, beispielsweise mit Wasser, Alkohol, Benzol, Hexan, Cyclohexan, Ether und/oder Aceton aus dem Holz extrahiert werden können.

Unter dem Begriff Holzwerkstoff werden erfindungsgemäß Werkstoffe verstanden, die durch Zerkleinern von Cellulose enthaltenden Materialien und anschließendes Zusammenfügen der Strukturelemente erzeugt werden.

Überraschend wurde gefunden, dass der Gehalt an Holzextraktstoff und/oder VOC in Materialien auf Basis von Cellulose auf besonders einfache und kostengünstige Weise verringert werden kann, wenn das Material unter für autokatalytische Oxidationsreaktionen spezifischen Bedingungen mit einem Oxidationskatalysator behandelt wird.

Autokatalytische Reaktionen sind dadurch gekennzeichnet, dass die gebildeten Reaktionsprodukte selbst katalytische Aktivität aufweisen. Somit erhöht sich bei einer autokatalytischen Reaktion die Katalysatormenge im Verlauf der Reaktion und die Reaktionsgeschwindigkeit wird erhöht. Aus diesem Grund verlaufen autokatalytische Reaktionen nach einer Initiierungsphase schneller als es aufgrund der ursprünglich eingesetzten Katalysatormenge zu erwarten wäre.

Überraschend wurde nun gefunden, dass dem oxidativen Abbau von Holzextraktstoff in Holz und/oder einem Holzwerkstoff ein solcher autokatälytischer Mechanismus zugrunde liegt. Diese Erkenntnis ermöglicht die erfindungsgemäße Verfahrensführung unter den für eine autokatalytische Reaktion spezifischen Reaktionsbedingungen. So kann in dem erfindungsgemäßen Verfahren beispielsweise eine äußerst geringe Menge an Oxidationskatalysator eingesetzt und dennoch eine befriedigende Reaktionsgeschwindigkeit erzielt werden. Da Autooxidationen Kettenreaktionen darstellen, die unter Bildung freier Radikale stattfinden, ist zu vermuten, dass der Oxidationskatalysator in dem erfindungsgemäßen Verfahren als Kettenreaktionsinitiator fungiert.

Die mit dem erfindungsgemäßen Verfahren behandelten Holz und/oder Holzwerkstoff weisen einen verringerten Gehalt an Holzextraktstoff auf. Insbesondere ermöglicht das erfindungsgemäße Verfahren eine wirkungsvolle Verringerung des Gehalts an ungesättigten Verbindungen im Holzextraktstoff wie beispielsweise Fettsäuren, Fettsäureestern wie insbesondere Triglyceriden und Linolsäure.

Wie bereits diskutiert entstehen aus den im Holzextraktstoff enthaltenen Verbindungen in der Wärme flüchtige organische Verbindungen (VOC). Aufgrund seines verringerten Gehalts an Holzextraktstoff zeichnet sich folglich das mit dem erfindungsgemäßen Verfahren behandelte Produkt auch dadurch aus, dass bei seiner Erwärmung beispielsweise in einem Trocknungsschritt eine geringere Menge VOC freigesetzt wird.

Ein besonders gutes Verhältnis zwischen Reaktionsgeschwindigkeit und eingesetztem Oxidationskatalysator wird erfindungsgemäß erhalten, wenn der Oxidationskatalysator in einer Menge von 1 x 10⁻⁷ bis 1 Gew.%, vorzugsweise von 3 x 10⁻⁷ bis 0,3 Gew.%, noch bevorzugter von 1 x 10⁻⁶ bis 0,1 Gew.%, noch bevorzugter von 3 x 10⁻⁶ bis 0,03 Gew.% und insbesondere von 1 x 10⁻⁵ bis 0,01 Gew.%, jeweils bezogen auf die Trockensubstanz des Holzes und/oder Holzwerkstoffes, eingesetzt wird.

Die Verwendung derart geringer Mengen an Oxidationskatalysator hat den Vorteil, dass das behandelte Material nur einen äußerst geringen Rückstand an Katalysator und ggf. für die Oxidation eingesetzten Hilfsstoffen enthält. Dies wirkt sich insbesondere günstig auf die Verarbeitungseigenschaften des Materials, wie beispielsweise dessen Verleimbarkeit aus. Somit erübrigt sich in dem erfindungsgemäßen Verfahren eine Abtrennung der Rückstände beispielsweise durch Extraktion und/oder Filtration.

Selbstverständlich ist es auch möglich zur Initiierung der Autooxidationsreaktion eine größere Menge Oxidationskatalysator einzusetzen. In diesem Fall findet der oxidative Abbau der Komponenten des Holzextraktstoffs schneller statt, als es für eine einfache katalytische Oxidationsreaktion zu erwarten ist. So ist es beispielsweise bei der Verwendung von Oxidationskatalysator in einer Menge von mehr als 1 Gew.% bezogen auf die Trockensubstanz des Materials auf Basis von Cellulose möglich, die Reaktion bereits nach wenigen Stunden abzubrechen und dennoch einen befriedigenden Abbau von Komponenten des Holzextraktstoffs und/oder VOC zu erzielen.

Die erfindungsgemäße Behandlung kann aber auch unabhängig von der eingesetzten Katalysatormenge früher als im Stand der Technik beschrieben beendet werden, da der autokatalytische oxidative Abbau der Komponenten des Holzextraktstoffs auch bei einer äußerst geringeren Feuchtigkeit des Substrates, beispielsweise nach einem Trocknungsschritt, weitergeht. So kann das erfindungsgemäße Verfahren unabhängig von der Katalysatormenge bereits nach wenigen Stunden abgebrochen werden.

Überraschend hat sich ferner gezeigt, dass es zur Durchführung des erfindungsgemäßen Verfahrens nicht nötig ist, Luft und/oder Sauerstoff in das Reaktionsgemisch einzubringen. Ebenfalls ist weder Rühren noch Schütteln des Gemischs während der Reaktion nötig.

Praktische Versuche haben ergeben, dass Enzyme besonders geeignete Oxidationskatalysatoren zur Initiierung der autokatalytischen Oxidationsreaktion sind. Vorteilhaft an der Verwendung von Enzymen ist insbesondere, dass sie verhältnismäßig geringe negative Wirkungen auf die weiteren Verarbeitungseigenschaften des behandelten Materials haben. Darüber hinaus weisen enzymatisch katalysierte Verfahren den Vorteil auf, dass sie im Allgemeinen wesentlich selektiver sind, weniger unerwünschte Nebenprodukte liefern und üblicherweise unter wesentlich schonenderen Bedingungen durchgeführt werden können als chemisch katalysierte Oxidationen.

Grundsätzlich eignen sich die verschiedensten Enzyme zum Einsatz im erfindungsgemäßen Verfahren. Als erfindungsgemäß besonders geeignet haben sich Oxidasen, wie die blaue Multikkupferoxidase, Laccasen, Catecholoxidasen, Peroxidasen, Bilirubinoxidasen, Manganperoxidasen, Ligninperoxidasen, Lipoxidasen (Lipoxygenasen) erwiesen.

So hat es sich als günstig erwiesen, wenn die Gesamtmenge an Enzym 0,001 bis 20 Enzymeinheiten (U) vorzugsweise 0,01 bis 15 U, noch bevorzugter 0,05 bis 10 U und insbesondere 0,1 bis 5 U, jeweils bezogen auf 1 g Material auf Basis von Cellulose, beträgt.

Mit dieser Menge an Enzym wird ein besonders gutes Verhältnis zwischen eingesetzter Katalysatormenge und Reaktionsgeschwindigkeit erhalten.

Unter Enzymeinheit (U) wird erfindungsgemäß diejenige Menge an Enzym verstanden, die benötigt wird, jeweils ein µmol Standardsubstrat pro Minute bei 30°C zu oxidieren. Die jeweiligen Standardsubstrate sind in "Methods in Enzymology" (Elsevier Academic Press, Amsterdam) und/oder in der "BRENDA"-Datenbank der Technischen Universität Braunschweig (www.brenda-enzymes.info) definiert. Das Standardsubstrat für Laccase ist erfindungsgemäß ABTS [2,2-Azino-bis(3-ethylbenzthiazolin-6-sulfonsäure]. Das Standardsubstrat für Lipoxidase (Lipoxygenasen) ist erfindungsgemäß Linolsäure. Weitere erfindungsgemäße Standardsubstrate sind ABTS für Bilirubinoxidase, Catechol für Catecholoxidase, ABTS für Peroxidase, Mn²⁺ für Manganperoxidase, und 3,4-Dimethoxybenzylalkohol für Ligninperoxidase.

Gewichts- oder Gew.%-Angaben für den Oxidationskatalysator beziehen sich erfindungsgemäß im Falle von Enzymen immer auf die reine, d.h. elektrophoretisch homogene Form des Enzyms. Dagegen kann das jeweilige zur Anwendung gelangende technische Präparat auch Hilfsstoffe, Lösungsmittel, Fremdproteine und Verunreinigungen enthalten. Fremdproteine sind beispielsweise katalytisch inaktive Proteine und/oder Enzyme mit anderen als den für das erfindungsgemäße Verfahren relevanten katalytischen Aktivitäten.

Es wird als Oxidationskatalysator mindestens ein Enzym-Mediatorsystemen, vorzugsweise ein Laccase-Mediator-System, insbesondere ein Laccase-Redox-Mediator-System und/oder mindestens eine Lipoxidase eingesetzt. Vorteilhaft an der Verwendung von Laccasen in Enzym-Mediatorsystemen ist, dass sie die meisten in Holzstoffen enthaltenden Triglyceride und konjugierte Harzsäuren in kurzer Zeit oxidieren können. In Gegenwart von Mediatoren, insbesondere Redox-Mediatoren, kann der Bereich der Oxidationssubstrate noch weiter vergrößert werden. Redox-Mediatoren fungieren zum einen als Substrat und zum anderen als Oxidationsmittel. Ein weiterer Vorteil der Verwendung von Laccasen besteht darin, dass sie eine hohe Temperaturstabilität aufweisen und im Handel erhältlich sind.

Ein für das erfindungsgemäße Verfahren geeigneter Mediator ist HBT (1-Hydroxy-benzotriazol). HBT ist ein gängiger Mediator für Laccase-Mediator-Systeme. Nachteilig an seiner Verwendung ist jedoch seine Toxizität und hoher Preis. Für das erfindungsgemäße Verfahren geeignete Mediatoren, die die vorgenannten Nachteile nicht aufweisen, sind Violursäure, TEMPO (2,2,6,6-Tetramethylpiperidin-1-oxyl), Ferulasäure (trans-4-Hydroxy-3-methoxyzimtsäure), Homovanillinsäure (4-Hydroxy-3-methoxyphenylessigsäure), Vanillylalkohol (4-Hydroxy-3-methoxybenzylalkohol), ABTS [2,2-Azino-bis(3-ethylbenzthiazolin-6-sulfonsäure], Syringaldehyd (4-Hydroxy-3,5-methoxybenzaldehyd), Acetosyringon (2,6-Dimethoxy-4-acetylphenol), Acetovanillon (2-Methoxy-4-acetylphenol), p-Cumarsäure (4-Hydroxzimtsäure), Vanillin (4-Hydroxy-3-methoxybenzaldehyd), 4-Hydroxybenzylalkohol, Phenol und/oder 2,6-Dimethoxyphenol. Unter Verwendung all dieser Mediatoren ist es möglich mit dem erfindungsgemäßen Verfahren, Holzextraktstoff in Holz und/oder Holzwerkstoff abzubauen.

Erfindungsgemäß besonders bevorzugt ist die Verwendung von ABTS als Mediator, da es weniger toxisch als HBT ist und dennoch eine vergleichbare Aktivität aufweist. Nachteilig an seinem Einsatz ist aber, dass es zu Verfärbungen des behandelten Substrats führen kann. Erfindungsgemäß ebenfalls besonders bevorzugt ist die Verwendung von Ferulasäure und Vanillylalkohol. Diese Mediatoren weisen verglichen mit HBT den Vorteil auf nicht toxisch und preisgünstig zu sein. Darüber hinaus sind diese Verbindungen farblos und führen höchstes zu geringen Verfärbungen des behandelten Substrats.

Die Gesamtmenge an Mediator beträgt vorzugsweise 0,001 bis 1 Gew.%, noch bevorzugter 0,01 bis 0,5 Gew.%, und insbesondere 0,05 bis 0,1 Gew.%, jeweils bezogen auf die Trockensubstanz des zu behandelnden Holz und/oder Holzwerkstoff.

Ein Nachteil an der Verwendung von Laccase-Mediator-Systemen besteht darin, dass sie nicht nur Holzextraktstoff sondern auch Lignin oxidieren. So werden Laccase-Mediator-Systeme beispielsweise auch für die Bleichung von Zellstoff verwendet. Diese Eigenschaft der Laccase-Mediator-Systeme kann bei ihrer Verwendung zu unerwünschten Oxidationsreaktionen führen und die Stabilität der behandelten Substrate beeinträchtigen. Aus diesem Grunde war es erfindungsgemäß erwünscht alternative Oxidationskatalysatoren auf Enzymbasis bereitzustellen.

Bei der Suche nach alternativen Oxidationskatalysatoren hat sich überraschenderweise Lipoxidase als für das erfindungsgemäße Verfahren besonders geeignet erwiesen. Der Einsatz von Lipoxidase hat gegenüber Laccase-Mediator-Systemen den Vorteil, dass Lipoxidase selektiv die Oxidation von ungesättigten Verbindungen, hauptsächlich von di- oder triungesättigten Fettsäuren zu den korrespondierenden Hydroperoxiden katalysiert. Dagegen katalysiert Lipoxidase die Oxidation von Lignin nicht, so dass unerwünschte Stabilitätseinbu-ßen bei den behandelten Materialien vermieden werden können. Darüber hinaus haben praktische Versuche gezeigt, dass Lipoxidase sich mindestens ebenso gut oder sogar besser als Laccase-Mediator-Systeme zur Initiierung der autokatalytischen Oxidation von Holzextraktstoff eignet.

Wird als Oxidationskatalysator ein Enzym eingesetzt, so ist es vorteilhaft, die Behandlung des Holzes und/oder Holzwerkstoffes mit dem Oxidationskatalysator in einem wässrigen Medium durchzuführen. Besonders gute Ergebnisse werden erhalten, wenn das wässrige Medium einen pH-Wert von 4 bis 10 aufweist. Bei der Verwendung von Laccase-Mediator-Systemen werden besonders gute Ergebnisse erzielt, wenn das wässrige Medium einen pH-Wert von 4 bis 6, vorzugsweise von etwa 5 aufweist. Wird Lipoxidase eingesetzt, so weist das wässrige Medium vorzugsweise einen pH-Wert von etwa 8 bis 10 und insbesondere von etwa 9 auf. Die Einstellung des jeweils erwünschten pH-Wertes geschieht mit Säure oder Lauge oder zweckmäßigerweise mit einem Puffer. Zur Einstellung des pH-Wertes bei der Verwendung von einem Laccase-Mediator-System haben sich insbesondere Acetat-, Succinat-, Malat-, Tartrat-, Citrat-, Glycolat-, Lactat-, Carbonat-, Oxalat-, Malonat- und Phthalatpuffer als besonders geeignet erwiesen und bei der Verwendung von Lipoxidase Borat-, Carbonat-, Phosphat-, Glycinat-, Tricin-, Tris-, Glycylglycin- und Barbitalpuffer.

Grundsätzlich ist das Gewichtsverhältnis zwischen wässrigem Medium und zu behandelndem Holz und/oder Holzwerkstoff unkritisch sofern eine ausreichende Menge an Wasser vorhanden ist, um die autokatalytische Oxidationsreaktion zu initiieren. Besonders gute Ergebnisse werden erzielt, wenn die Feuchte des Holzes und/oder Holzwerkstoffes auf einen Wert von 10 bis 300 Gew.%, vorzugsweise von 20 bis 200 Gew.%, noch bevorzugter von 50 bis 150 Gew.%, und insbesondere von 60 bis 130 Gew.%, jeweils bezogen auf die Trockensubstanz des Holzes und/oder Holzwerkstoffes, eingestellt wird.

In den aus dem Stand der Technik bekannten katalysierten Verfahren wird dagegen üblicherweise eine erheblich höhere Menge an Wasser (Suspension) verwendet. Dass das erfindungsgemäße Verfahren dagegen auch bei deutlich geringeren Ausgangsfeuchten durchführbar ist, ist wahrscheinlich darauf zurückzuführen, dass das wässrige Medium lediglich für die Initiierung der autokatalytischen Oxidationsreaktion benötigt wird. Die verglichen mit dem Stand der Technik verringerte Menge an Reaktionswasser hat neben einer einfacheren Verfahrensführung den Vorteil, dass die behandelten Materialien leichter getrocknet werden können.

Wird die erfindungsgemäße Behandlung des Holzes und/oder Holzwerkstoffes in einem Enzym enthaltenden wässrigen Medium durchgeführt, so kann die Menge an Enzym in dem wässrigen Medium in weiten Bereichen variieren. Als besonders günstig hat es sich erwiesen, wenn das wässrige Medium 0,001 bis 200 U ml⁻¹, vorzugsweise von 0,01 bis 100 U ml⁻¹, noch bevorzugter 0,03 bis 50 U ml⁻¹ und insbesondere 0,1 bis 10 U ml⁻¹ Enzym enthält.

Auch die Temperatur, bei der die autokatalytische Oxidation durchgeführt wird, kann in weiten Bereichen variieren. Ein großer Vorteil des erfindungsgemäßen Verfahrens gegenüber einfachen katalytischen Reaktion besteht darin, dass die autokatalytische Reaktion - nach der Initiierungsphase - auch bei der Verwendung eines temperaturempfindlichen Katalysators, wie beispielsweise Enzymen, bei erhöhten Temperaturen durchgeführt werden kann. Die Ursache hierfür liegt wahrscheinlich darin, dass die bei der Autokatalyse gebildeten katalytisch wirkenden Oxidationsprodukte im Unterschied zu den als Katalysatoren eingesetzten Enzymen nicht temperaturempfindlich sind. Bei einer einfachen Enzym katalysierten Reaktion ist somit grundsätzlich darauf zu achten, dass die Reaktionstemperatur einen bestimmten Wert, bei dem sich das jeweils verwendete Enzym zersetzt, nicht überschreitet. Diese Vorsichtsmaßnahme ist bei der erfindungsgemäßen Verfahrensführung nicht notwendig.

Praktische Versuche haben gezeigt, dass die autokatalytische Oxidation im erfindungsgemäßen Verfahren nach der Initiierungsphase zweckmäßigerweise bei einer Temperatur von über 30°C, vorzugsweise von mehr als 40°C, noch bevorzugter von mehr als 60°C, noch bevorzugter von mehr als 80°C, noch bevorzugter von mehr als 100°C und insbesondere von mehr als 150°C durchgeführt wird.

Die Verwendung höherer Reaktionstemperaturen ist vorteilhaft, weil sie mit einer höheren Reaktionsgeschwindigkeit einhergeht. Ein weiterer Vorteil besteht darin, dass bei höheren Temperaturen die Austreibung von VOC aus dem Substrat erleichtert wird. Mit dem erfindungsgemäßen Verfahren können VOC somit bereits während des Herstellungsverfahrens eliminiert werden.

Selbstverständlich ist es auch möglich, im Verlaufe der Durchführung des erfindungsgemäßen Verfahrens verschiedene Temperaturen einzustellen. So ist es beispielsweise besonders bevorzugt zu Beginn des Verfahrens eine niedrigere Temperatur als in seinem weiteren Verlauf einzustellen. Als ganz besonders geeignet hat sich das Durchführen eines Trockungsschritts nach der Behandlung mit dem Oxidationskatalysator erwiesen. Dieser Trockungsschritt wird vorzugsweise bei Temperaturen von über 100°C, vorzugsweise über 150°C und insbesondere über 200°C durchgeführt.

Als Holz und/oder Werkstoff können im erfindungsgemäßen Verfahren die verschiedensten Materialien eingesetzt werden. Besonders gute Ergebnisse werden jedoch bei der Behandlung von Holzspänen, insbesondere von Spänen für die Herstellung von OSB-Platten, erhalten.

Grundsätzlich ist die Reaktionsgeschwindigkeit des erfindungsgemäßen Verfahrens umso höher, je größer die Oberfläche des zu behandelnden Holz und/oder Werkstoff ist. Die Oberfläche nimmt aber bekanntermaßen mit abnehmender Partikelgröße zu. Somit wird im erfindungsgemäßen Verfahren eine höhere Reaktionsgeschwindigkeit erzielt, wenn Substrate mit einer kleineren Partikelgröße behandelt werden.

Im Unterschied zu den bekannten Verfahren ist das erfindungsgemäße Verfahren jedoch nicht darauf beschränkt, kleinstückige Materialien beispielsweise Fasern als Substrate einzusetzen. Es wurde nämlich überraschend gefunden, dass es ausreicht, lediglich die Oberfläche oder vorzugsweise lediglich eines Teils der Oberfläche des zu behandelnden Materials mit dem Oxidationskatalysator zu behandeln, um einen Abbau des Holzextraktstoffs im gesamten Querschnitt des Materials zu bewirken. Die Ursache hierfür liegt vermutlich darin, dass bei der Autooxidation katalytisch aktive Oxidationsprodukte im Inneren des Holzes und/oder Holzwerkstoffes gebildet werden. Diese bewirken wiederum eine Oxidation von Holzextraktstoff im Inneren des zu behandelnden Holzes und/oder Holzwerkstoffes, so dass im Verlaufe der Autooxidation Holzextraktstoff im gesamten Querschnitt des Materials abgebaut werden kann.

Aus dem gleichen Grund ermöglicht es die erfindungsgemäße Verfahrensführung die Oxidationsreaktion bei Normaldruck und ohne Anlegen eines Vakuums durchzuführen.

Ein weiterer Gegenstand der Erfindung ist Holz bzw. ein Holzwerkstoff, der mit dem erfindungsgemäßen Verfahren hergestellt wurde. Das erfindungsgemäße Holz bzw. der erfindungsgemäße Holzwerkstoff wird im Unterschied zum Stand der Technik unter autokatalytischen Reaktionsbedingungen hergestellt. Da im Laufe der Autokatalysation Oxidationsprodukte gebildet werden, die selbst katalytische Aktivität aufweisen, ist es erfindungsgemäß möglich, zur Herstellung des Holzwerkstoffs eine geringere Menge an Katalysator als in den bekannten Verfahren einzusetzen. Demzufolge enthält der erfindungsgemäße Holzwerkstoff verglichen mit den in bekannten Verfahren hergestellten Holzwerkstoffen eine geringere Menge an ursprünglich eingesetztem Katalysator, beispielsweise Enzym. Gewöhnlich steigt mit der Menge des eingesetzten Katalysators auch der Gehalt an üblicherweise eingesetzten Hilfsstoffen wie beispielsweise Puffersubstanzen an. Aus diesem Grund enthält der erfindungsgemäße Holzwerkstoff verglichen mit dem Stand der Technik üblicherweise auch eine geringere Menge Hilfsstoff.

Ein weiterer Unterschied zu den mit einfachen enzymatisch katalysierten Reaktionen hergestellten Holz und/oder Holzwerkstoff besteht darin, dass das erfindungsgemäße Holz und/oder Holzwerkstoff mit einer geringeren Ausgangsfeuchte hergestellt werden kann. Die wässrige Phase wird erfindungsgemäß nämlich lediglich zur Initiierung der autokatalytischen Reaktion eingesetzt. Demzufolge weist das erfindungsgemäße behandelte Holz und/oder Holzwerkstoff nach seiner Herstellung eine geringere Holzfeuchte auf als Holz und/oder Holzwerkstoff, die mit den im Stand der Technik bekannten Verfahren hergestellt wurden. Dies hat den Vorteil, dass das erfindungsgemäße Holz und/oder Holzwerkstoff auf einfache Weise getrocknet werden kann.

Im Folgenden wird die Erfindung anhand mehrerer Ausführungsbeispiele näher erläutert:

### 1. Verwendete Reagenzien

Für die folgenden Versuche wurden frisch hergestellte Kiefernspäne (Pinus sylvestris L) verwendet. Vor der enzymatischen Behandlung wurde das Holz in einer Retsch ZM-1000 Ultra-Zentrifugal-Mühle auf eine Partikelgröße von weniger als 2 mm (gesiebt mittels eines 10er Drahtsiebs) gemahlen. Parallel dazu wurden OSB-Späne und grobstückige Holzstreifen enzymatisch behandelt. Um ein homogenes Referenzmaterial zu erhalten, wurden die OSB-Späne im Labor mittels Schlittenmikrotom in den Abmessungen 0,4 x 20 x 30 mm hergestellt. Holzstreifen hatten eine Abmessung von 3 x 10 x 50 mm. Nach der Enzymbehandlung wurden die Labor-OSB-Späne und Holzstreifen wie oben beschrieben auf <2mm gemahlen.

Für die Laccase-Mediator-Versuche wurde rekombinante Laccase des Typs *Trametes villosa (Product Nr. 44008),* bezogen von Novo Nordisk eingesetzt. Die Laccase-Aktivität wurde spektrofotometrisch bei 420 nm und einer Konzentration von 0,4 mmol l⁻¹ ABTS [2,2'Azino-bis(3-ethylbenzthiazolin-6-sulfonsäure)] als Substrat (ε = 43,2 cm²µmol⁻¹) in 20 mmol 1⁻¹ Natriumsuccinatpuffer bei einem pH-Wert von 5 gemessen. Eine Einheit (U) Laccase wurde definiert als diejenige Menge an Enzym, die benötigt wird, um 1 µmol ABTS pro Minute bei 30°C zu oxidieren. Als Mediatoren wurden Violursäure, TEMPO (2,2,6,6-Tetramethylpiperidin-1-oxyl), Ferulasäure (trans-4-Hydroxy-3-methoxyzimtsäure), Homovanillinsäure (4-Hydroxy-3-methoxyphenylessigsäure), Vanillylalkohol (4-Hydroxy-3-methoxybenzylalkohol) und/oder ABTS verwendet und mit HBT (1-Hydroxybenzotriazol) verglichen. Alle untersuchten Mediatoren wurden von Sigma-Aldrich bezogen. Aus Sojabohnen gewonnene Lipoxidase (Typ 1B) wurde ebenfalls von Sigma-Aldrich als lyophilisiertes Pulver erhalten. Eine Einheit (U) Lipoxidase wurde definiert als diejenige Menge an Enzym, die benötigt wird, um 1 µmol Linolsäure als Substrat pro Minute bei einem pH-Wert von 9,0 und 25°C zu oxidieren. Die Messung der Linolsäureoxidation erfolgte mittels HPLC und UV-Detektion bei 200 nm und 234 nm.

### 2. Untersuchung der katalytischen Aktivität von Laccase-Mediator-Systemen und Lipoxidase

### 2.1 Allgemeine Vorgehensweise

1 g Holz (Partikel, Späne oder grobstückige Streifen wie oben beschrieben) mit einem Feuchtigkeitsgehalt von etwa 50 % wurde in ein Glasfläschchen mit Drehverschluss gegeben. Nach dem Vermischen mit 1 ml Acetatpuffer (0,01 M, pH 5), enthaltend 0,005 M Mediator und 5 U ml⁻¹ Laccase (150 Gew.% Gesamtfeuchte), wurden die Proben mindestens 24 Stunden lang inkubiert. In Versuchen zur Ermittlung des Einflusses auf die Holzfeuchte wurden außerdem 0,5 ml Acetatpuffer (für 100 Gew.% Gesamtfeuchte), enthaltend 0,01 M Mediator und 10 U ml⁻¹ Laccase sowie 0,1 ml Acetatpuffer (für 60 Gew.% Gesamtfeuchte), enthaltend 0,05 M Mediator und 50 U ml⁻¹ Laccase verwendet. Blindproben mit Wasser, Puffer oder Puffer und Mediatoren ohne Enzyme wurden auf die gleiche Weise behandelt. Die Reaktionsgemische mit Lipoxidase enthielten 2 U ml⁻¹ Lipoxidase in einem Boratpuffer (0,1 M, pH 9).

Alle Versuche wurden mindestens dreimal wiederholt. Nach der enzymatischen Behandlung wurden die Proben gefriergetrocknet und bis zur Extraktion in einem gefrorenen Zustand gehalten. Die behandelten Labor-OSB-Späne sowie grobstückigen Holzstreifen wurden vorher wie unter Ziffer 1 beschrieben auf <2mm gemahlen. In Versuchen zur Ermittlung des Einflusses der Temperatur wurden die Proben 15 Minuten lang bei 200°C getrocknet und dann extrahiert. Die Extraktion wurde durchgeführt mit einem ASE 100 (Accelerated Solvent Extractor, Dionex) mit Aceton/Wasser (95:5 v v⁻¹) bei 110°C mit vier statischen Fünf-Minuten-Zyklen. Das Lösungsmittel wurde durch Verdampfen entfernt und die Proben wurden unter Verwendung von 80 µL bis-(Trimethylsilyl)-trifluoroacetamid, 20 µL Pyridin und 20 µL Trimethylchlorsilan silyliert. Um die Reaktion zu vervollständigen wurden die Fläschchen 45 Minuten lang bei 70°C gehalten. Heneicosansäure und Betulinol wurden als interne Standards verwendet. Die Substanzen wurden auf einem Agilent 6890N Gaschromatographen, versehen mit einer DB-5 30 m x 0,25 mm i.D. Säule (0,25 µm Filmdicke) getrennt. Das Temperaturprogramm des Säulenofens war 100°C (1,5 min), 5°C/Min. bis 300°C (15 Min.) bei einem He-Fluss von 1,5 mL/ Min. und einem Splitverhältnis von 20:1, 260°C Injektor und 330°C FID Temperatur. Alle Ergebnisse wurden auf Basis des gefriergetrockneten Holzes berechnet. Die einzelnen Verbindungen wurden über GC-MS Analyse der silylierten Extrakte unter Verwendung einer ähnlichen Säule und dem gleichen Temperaturprogramm wie oben beschrieben identifiziert.

Zur Lokalisierung der Enzyme im Holz wurden grobstückige Holzstreifen 6 und 24 Stunden lang wie oben beschrieben enzymatisch behandelt, mit 3 x 5 ml Puffer abgespült, gefolgt von einer gründlichen Nachspülung mit ca. 50 ml Puffer. Die Aktivität der Laccase bzw. Lipoxidase in den vereinigten Lösungen wurde gemessen und aufsummiert. Die abgespülten Holzstreifen wurden dann wie oben beschrieben auf <2mm gemahlen, mit 10 ml Puffer vermischt und 2 Stunden lang unter kräftigem Schütteln inkubiert. Danach wurde das Holzmaterial abzentrifugiert und im Überstand wiederum die Enzymaktivität ermittelt. In einigen Versuchen wurde dem Puffer 0,1% Tween 20 zugesetzt, was aber die Enzymausbeute nicht wesentlich verbesserte.

Für die Messung von VOC aus Holz wurden unbehandelte und enzymatisch behandelte Proben in einem Ofen 15 Minuten lang bei 200°C getrocknet. Diese harte Trocknung wurde durchgeführt, um den Trocknungsprozess, wie er für Holzpartikel in der Industrie verwendet wird, zu simulieren. 0,5 g des getrockneten Holzes wurden in einem 20 ml Fläschchen mit Gasraum, das mit einem PTFE/Silikonseptum verschlossen wurde, eingebracht und eine Woche lang bei 25°C aufbewahrt. SPME-Fasern und der Halter wurden von Supelco (Bellefonte, PA, USA) erhalten. Die mit Carboxen-polydimethylsiloxan (CAR-PDMS, 75 µm) beschichteten Fasern wurden nach Konditionierung gemäß Herstellerempfehlung 30 Minuten lang bei 25°C der Gasphase oberhalb der Proben ausgesetzt. Anschließend wurden die Fasern mittels einer Nadel in den Injektor des GC eingebracht, um die zu analysierenden Substanzen zu desorbieren. Das Temperaturprogramm für die SPME-Analyse betrug: 40°C (4 Min.), 4°C/Min. bis 110°C, 30°C/ Min. bis 300°C (5 Min.). Die splitlose Injektion wurde bei 270°C durchgeführt und der Detektor wurde auf 330°C gehalten. Die gleiche Säule, wie oben beschrieben, wurde verwendet.

Tabelle 1 zeigt die Konzentrationen der Holzextraktstoffe, die für die erfindungsgemäßen Versuche zum enzymatischen Abbau verwendet wurden.

**Tabelle 1: Gehalt an Holzextraktstoff in unbehandelten Holzproben, wie sie für die enzymatischen Abbauversuche eingesetzt wurden**

| | Gehalt [mg g⁻¹] | SD [mg g⁻¹] |
|---|---|---|
| Linolsäure | 0,98 | 0,04 |
| ölsäure | 1,22 | 0,07 |
| Stilbene (STIL) | 1,59 | 0,08 |
| Konjugierte Harzsäuren (CRA) | 3,95 | 0,12 |
| Nicht-konjugierte Harzsäuren (NCRA) | 3,89 | 0,14 |

Da sich einige Holzextraktstoffe in den Abbauversuchen auf ähnliche Weise verhielten, wurden sie entsprechend ihrer chemischen Grundstrukturen in verschiedenen Gruppen kombiniert:
1. Die Stilben-Gruppe umfasst Pinosylvinmonomethylether und Pinosylvin. Das Verhältnis des Pinosylvinmonomethylethers zu Pinosylvin beträgt etwa 2:1;
2. Palustrinsäure, Abietische Säure, Lävopimarsäure und Neoabietinsäure sind in der Gruppe der konjugierten Harzsäuren (CRAs) zusammengefasst und
3. Pimarinsäure, Sandaropimarsäure, Isopimarsäure und Dehydroabietinsäure bilden die Gruppe der nicht-konjugierten Harzsäuren (NCRAs). Linolsäure und Ölsäure werden getrennt untersucht, da sie aufgrund ihres Gehalts an Doppelbindungen ein anderes Abbaumuster zeigen. Triglyceride und Stearylester wurden lediglich in Spuren detektiert und wurden aus diesem Grunde nicht berücksichtigt.

### 2.2 Untersuchung der katalytischen Aktivität von Laccase-Mediator-Systemen

In diesem Versuch werden sechs unterschiedliche Laccase-Substrate mit verschiedenen funktionellen Gruppen im Hinblick auf ihre Fähigkeit, die Autooxidation von Holzextraktstoff zu katalysieren, untersucht und mit HBT verglichen. In der Vergangenheit hat sich HBT als einer der potentesten Mediatoren in Laccase-Mediator-Systemen erwiesen. Aufgrund seiner vermuteten Toxizität und seines hohen Preises besteht jedoch ein Bedürfnis, alternative Mediatoren einzusetzen. Tabelle 2 zeigt, dass alle getesteten Mediatoren in der Lage waren, die verschiedenen Holzextraktstoffgruppen innerhalb von 24 Stunden zumindest zu einem gewissen Grad abzubauen.

**Tabelle 2: Vergleich der Effizienz des Abbaus von Holzextraktstoff von verschiedenen Laccase-Mediator-Systemen bei 150 Gew.% Gesamtfeuchte nach 24-stündiger Inkubation bei 30°C in Prozent [%]**

| | Linolsäure | Ölsäure | STIL | CRA | NCRA |
|---|---|---|---|---|---|
| Homovanillinsäure | 16,7 | 9,7 | 26,6 | 34,8 | 3,4 |
| Vanillylalkohol | 37,2 | 17,8 | 31,5 | 47,0 | 1,6 |
| Ferulasäure | 40,9 | 19,0 | 37,3 | 43,6 | 4,2 |
| Violursäure | 20,3 | 10,5 | 11,1 | 7,2 | 2,8 |
| TEMPO | 12,1 | 6,2 | 25,4 | 11,0 | 0,3 |
| ABTS | 59,2 | 29,9 | 57,8 | 51,9 | 1,8 |
| HBT | 63,6 | 30,4 | 37,2 | 52,0 | 8,1 |

Aus Tabelle 2 geht hervor, dass HBT und ABTS als Mediatoren innerhalb von 24 Stunden zu einer Verringerung der Menge an Linolsäure von etwa 60 %, an CRAs von etwa 50 % und an Ölsäure von etwa 30 %, führten. Nachteilig an der Verwendung von ABTS als Mediator ist, dass das Radikalkation, das die reaktive Spezies darstellt, eine dunkelgrüne Farbe aufweist und somit zu Verfärbungen des behandelten Holzes führt. Darüber hinaus ist ABTS eine synthetische Verbindung.

Die anderen getesteten Mediatoren wie Ferulasäure oder Vanillylalkohol bewirkten leicht geringere Abbauraten als HBT, aber erwiesen sich als dennoch vielversprechend. In allen Experimenten war der Abbau von Linolsäure größer als der von Ölsäure, was aufgrund des unterschiedlichen Gehalts an ungesättigten Gruppen in den Molekülen erklärt werden kann. CRAs erwiesen sich als ähnlich leicht enzymatisch abbaubar wie Linolsäure. Die Menge an NCRAs blieb dagegen nahezu unverändert. Stilbene, die ein Potential als Laccase-Substrate zeigen und Antioxidantien wurden ebenfalls oxidiert, aber nicht in dem gleichen Ausmaß wie CRAs und Linolsäure.

Somit hat sich die Kombination aus Laccase und ABTS sowie insbesondere von Laccase und Ferulasäure und Vanillylalkohol als besonders geeignet zum Einsatz in dem erfindungsgemäßen Verfahren erwiesen.

### 2.3 Vergleich der Effizienz des Abbaus von Holzextraktstoff bei verschiedenen Gesamtfeuchten

**Tabelle 3: Vergleich der Effizienz des Abbaus von Holzextraktstoff von Laccase-Mediator-Systemen (Laccase-Ferulasäure und Laccase-HBT) bei 100 Gew.% Gesamtfeuchte nach 24-stündiger Inkubation bei 30°C in Prozent [%]**

| | Linolsäure | Ölsäure | STIL | CRA | NCRA |
|---|---|---|---|---|---|
| Ferulasäure | 41,0 | 17,0 | 35,1 | 43,5 | 3,5 |
| HBT | 59,9 | 28,2 | 37,0 | 50,3 | 7,1 |

**Tabelle 4: Vergleich der Effizienz des Abbaus von Holzextraktstoff von Laccase-Mediator-Systemen (Laccase-Ferulasäure und Laccase-HBT) bei 60 Gew.% Gesamtfeuchte nach 24-stündiger Inkubation bei 30°C in Prozent [%]**

| | Linolsäure | Ölsäure | STIL | CRA | NCRA |
|---|---|---|---|---|---|
| Ferulasäure | 30,0 | 14,0 | 27,1 | 32,2 | 3,0 |
| HBT | 44,2 | 25,6 | 30,2 | 22,0 | 8,0 |

Tabellen 3 und 4 stellen Ergebnisse aus Versuchen dar, die unter denselben Bedingungen wie in den Versuchen aus Tabelle 2, jedoch bei geringeren Holzfeuchten durchgeführt wurden. Es zeigte sich, dass die Herabsetzung des Feuchtegehalts auf 100 Gew.% (Tabelle 3) keine signifikante Verminderung der Abbaueffizienz bewirkte und dass auch bei der sehr niedrigen Holzfeuchte von 60 Gew.% noch ein signifikanter Abbau auftritt.

### 2.4 Vergleich der Effizienz des Abbaus von Holzextraktstoff bei verschiedenen Holzmaterialien

**Tabelle 5: Vergleich der Effizienz des Abbaus von Holzextraktstoff von Laccase-Mediator-Systemen (Laccase-Ferulasäure und Laccase-HBT) bei 150 Gew.% Gesamtfeuchte mit verschiedenen Holzmaterialien nach 24-stündiger Inkubation bei 30°C in Prozent [%]**

| | Linolsäure | Ölsäure | STIL | CRA | NCRA |
|---|---|---|---|---|---|
| Holzpartikel <2mm: | | | | | |
| Ferulasäure | 40,9 | 19,0 | 37,3 | 43,6 | 4,2 |
| HBT | 63,6 | 30,4 | 37,2 | 52,0 | 8,1 |
| Labor-OSB-Späne 0,4x20x30 mm: | | | | | |
| Ferulasäure | 33,1 | 16,0 | 32,3 | 33,5 | 4,1 |
| HBT | 63,1 | 25,2 | 35,0 | 46,0 | 6,1 |
| grobstückige Holzstreifen 3x10x50 mm: | | | | | |
| Ferulasäure | 31,9 | 15,2 | 30,2 | 30,6 | 3,7 |
| HBT | 61,0 | 24,4 | 32,2 | 45,8 | 5,0 |

Aus Tabelle 5 geht hervor, dass die Effizienz des Abbaus von Holzextraktstoff nur in geringfügigem Ausmaß von der Größe, d.h. den Abmessungen des Holzmaterials abhängt. Eine mögliche Erklärung hierfür liegt darin, dass das Enzym im Zuge der Reaktion in den gesamten Querschnitt des Holzmaterials eindringt, um dort die Holzextraktstoffe zu oxidieren. Um diese Theorie zu überprüfen wurde die Enzymaktivität nach 24 Stunden in parallel mitgeführten und identisch behandelten grobstückigen Holzstreifen wie unter Ziffer 1 beschrieben ermittelt. Die Ergebnisse sind in Tabelle 6 zusammengefasst.

**Tabelle 6: Aktivität der Laccase in grobstückigen Holzstreifen bezogen auf 1 g Holz nach 6 und 24 h enzymatischer Behandlung im Vergleich zur ursprünglich aufgebrachten Aktivität.**

| | Aktivität [U] nach 6 h | Aktivität [U] nach 24 h |
|---|---|---|
| Ursprünglich auf Holzmaterial aufgebrachte Laccase-Aktivität | 5,105 | 5,050 |
| Laccase-Aktivität an der Oberfläche des Holzmaterials | 4,623 | 3,153 |
| Laccase-Aktivität im Inneren des Holzmaterials | <0,001 | <0,001 |

Aus Tabelle 6 geht hervor, dass auf die Holzoberfläche aufgebrachte Laccase nicht wie vermutet in den Querschnitt des Holzes eindringt. Die geringere Aktivität im Vergleich zur ursprünglich aufgebrachten Aktivität ist möglicherweise auf eine teilweise Inaktivierung des Enzyms während der Behandlungsdauer zurückzuführen.

### 2.5 Untersuchung der katalytischen Aktivität von Lipoxidase

In Tabelle 7 wird die Degradationseffizienz von Laccase-HBT und von Lipoxidase nach 24-stündiger Inkubation bei 30°C verglichen (Angaben in Prozent [%]).

**Tabelle 7: Vergleich der Degradationseffizienz von Laccase-HBT und von Lipoxidase nach 24-stündiger Inkubation bei 30°C in Prozent [%]**

| | Linolsäure | Ölsäure | STIL | CRA | NCRA |
|---|---|---|---|---|---|
| Holzpartikel <2mm: | | | | | |
| Laccase-HBT | 63,6 | 30,4 | 37,2 | 52,0 | 8,1 |
| Lipoxidase | 84,7 | 53,8 | 1,5 | 36,9 | 0,2 |
| Labor-OSB-Späne 0,4x20x30 mm: | | | | | |
| Laccase-HBT | 63,1 | 25,2 | 35,0 | 46,0 | 6,1 |
| Lipoxidase | 80,1 | 51,0 | 1,7 | 33,3 | 0,4 |
| grobstückige Holzstreifen 3x10x50 mm: | | | | | |
| Laccase-HBT | 61,0 | 24,4 | 32,2 | 45,8 | 5,0 |
| Lipoxidase | 84,0 | 49,2 | 0,9 | 29,1 | 0,2 |

Tabelle 7 zeigt, dass Lipoxidase sich mindestens ebenso gut oder sogar besser als Laccase-HBT zur autokatalytischen Oxidation von Holzextraktstoff eignet. Es werden nicht nur Fettsäuren, sondern auch andere Komponenten des Holzextraktstoffs oxidiert.

**Tabelle 8: Aktivität der Lipoxidase in grobstückigen Holzstreifen bezogen auf 1 g Holz nach 6 und 24 h enzymatischer Behandlung im Vergleich zur ursprünglich aufgebrachten Aktivität.**

| | Aktivität [U] nach 6 h | Aktivität [U] nach 24 h |
|---|---|---|
| Ursprünglich auf Holzmaterial aufgebrachte Lipoxidase-Aktivität | 2,125 | 1,940 |
| Lipoxidase-Aktivität an der Oberfläche des Holzmaterials | 1,353 | 0,910 |
| Laipoxidase-Aktivität im Inneren des Holzmaterials | <0,001 | <0,001 |

Aus Tabelle 8 geht hervor, dass auf die Holzoberfläche aufgebrachte Lipoxidase nicht in den Querschnitt des Holzes eindringt. Die geringere Aktivität im Vergleich zur ursprünglich aufgebrachten Aktivität ist möglicherweise auf eine teilweise Inaktivierung des Enzyms während der Behandlungsdauer zurückzuführen.

Die Ergebnisse aus Tabellen 7 und 8 zeigen außerdem, dass sich Lipoxidase zur effizienten Oxidation von Holzextraktstoffen eignet, obwohl sie im Gegensatz zum Laccase-Mediator-System keinen Mediator benötigt und wie die Laccase nicht in den Querschnitt des Holzmaterials eindringt.

Somit konnte gezeigt werden, dass die Autooxidation von Holzextraktstoff, durch Behandlung mit einem Oxidationskatalysator unter autokatalytischen Reaktionsbedingungen wirkungsvoll durchgeführt werden kann. Als hierbei besonders geeignet hat sich der Einsatz von Laccase-Mediator- oder Lipoxidase-Systemen als Oxidationskatalysatoren erwiesen.

### 3. Untersuchung der Mediatorqualitäten von Stilbenen in Laccase-Mediator-Systemen

Um herauszufinden, ob sich Stilbene als Mediatoren eignen und somit zum Abbau von Holzextraktstoff während der enzymatischen Behandlung beitragen, wurde Holz schrittweise mit Hexan und Aceton extrahiert. Der Hexanextrakt enthielt unpolare Substanzen und zu einem geringen Anteil Pinosylvinmonomethylether. In dem Acetonextrakt stellten die beiden Stilbene die in den größten Anteilen vorkommenden Substanzen dar. Das extrahierte Holz wurde entweder ausschließlich mit dem Hexanextrakt oder mit beiden Extrakten gemeinsam vermischt. Nach dem Verdampfen der Lösungsmittel im Vakuum wurde das Holz wie oben beschrieben behandelt. Der Abbau des Holzextraktstoffs war in beiden Proben nahezu identisch. Aus diesem Grunde kann davon ausgegangen werden, dass die Stilbene nicht als zusätzliche Mediatoren fungieren.

Das gleiche Experiment zeigte ferner, dass es hinsichtlich der Abbaueffizienz der Enzyme keinen wesentlichen Unterschied macht, ob das Holz direkt behandelt wird oder ob die Holzextraktstoffe vorher wie oben beschrieben extrahiert und dann wieder auf das Holz aufgebracht werden. Dies ist überraschend, da Holzextraktstoffe im Holz primär in konzentrierter Form vorliegen, beispielsweise als Harz in Harzkanälen oder als Speicherstoffe in Parenchymzellen. Durch das oben beschriebene Extrahieren und Wiederaufbringen werden die Holzextraktstoffe jedoch gleichmäßig und fein im Holz verteilt und sollten daher einer einfachen enzymatisch katalysierten Reaktion wesentlich besser zugänglich sein und folglich wesentlich schneller und effizienter abgebaut werden. Dies ist aber nicht der Fall, was darauf hinweist, dass dem erfindungsgemäßen Verfahren ein autokatalytischer Prozess zugrunde liegt.

### 4. Temperaturabhängigkeit der Autooxidation

Die oben beschriebenen Versuche wurden bei verschiedenen Temperaturen durchgeführt, um die Temperaturbedingungen im erfindungsgemäßen Verfahren zu optimieren. Hierbei wurde herausgefunden, dass das erfindungsgemäße Verfahren grundsätzlich in einem weiten Temperaturbereich durchgeführt werden kann. Hervorragende Ergebnisse werden insbesondere bei einer Einstellung der Reaktionstemperatur auf einen Wert von 30°C bis 50°C erhalten. Der Grund hierfür liegt höchstwahrscheinlich darin, dass das für die Initiierungsreaktion eingesetzte Enzym bei diesen Temperaturen keine merkliche Inaktivierung erfährt und darüber hinaus die Reaktionsgeschwindigkeit ausreichend hoch ist. Jedoch wurde auch bei 70°C und 100°C innerhalb von 24 Stunden Holzextraktstoff in einem merklichen Ausmaß abgebaut. Dies ist höchstwahrscheinlich auf thermisch induzierte Autooxidationsprozesse zurückzuführen, wie auch die Beobachtung, dass eine Trocknung des Holzes bei 200°C im Anschluss an die Enzymbehandlung das Ergebnis wesentlich verbesserte.

### 5. Optimierung der Ausgangsfeuchte des Substrats

Die oben beschriebenen Versuche wurden bei verschiedenen Ausgangsfeuchten des Substrats durchgeführt. Hierbei hat sich gezeigt, dass das erfindungsgemäße Verfahren grundsätzlich bei den verschiedensten Substratsausgangsfeuchten durchgeführt werden kann. Als besonders geeignet hat sich jedoch die Einstellung des Feuchtigkeitsgehalts auf ein Fest-:Flüssig-Verhältnis von 1:1 bis 1:1,5 (entsprechend einem Feuchtegehalt von 100 Gew.% bis 150 Gew.%)erwiesen.

Im Folgenden wird die Erfindung anhand der nachfolgenden Zeichnung näher erläutert. In der Zeichnung zeigt
- Fig. 1:: den zeitlichen Verlauf des Abbaus verschiedener Komponenten des Holzextraktstoffs mit Laccase-HBT bei 25°C und bei 50°C,
- Fig.2:: den zeitlichen Verlauf des Abbaus verschiedener Komponenten des Holzextraktstoffs mit Laccase-HBT bei 25°C und bei 50°C,
- Fig.3:: den zeitlichen Verlauf des Abbaus verschiedener Komponenten des Holzextraktstoffs mit Laccase-HBT bei verschiedenen (in Klammer angegebenen) Enzymak- tivitäten, wobei die Behandlung bei 50°C mit an- schließender Trocknung der Proben für 15 Minuten bei 200°C erfolgte.
- Fig.4:: ein GC Chromatogramm von flüchtigen Verbindungen, die von getrocknetem unbehandelten Holz freigesetzt wurden,
- Fig.5:: ein GC Chromatogramm von flüchtigen Verbindungen, freigesetzt von getrocknetem Holz, das mit Laccase- HBT 24 Stunden lang behandelt wurde.

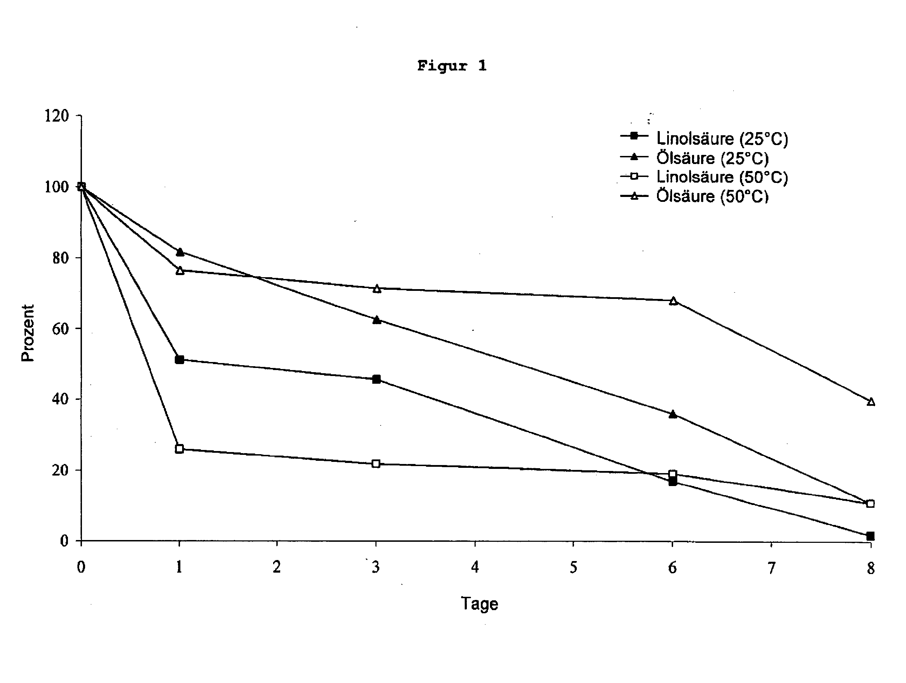

In den Figuren 1 bis 3 wird der zeitliche Verlauf des Abbaus der Holzextraktstoffe mit Laccase-HBT bei 25°C und 50°C dargestellt.

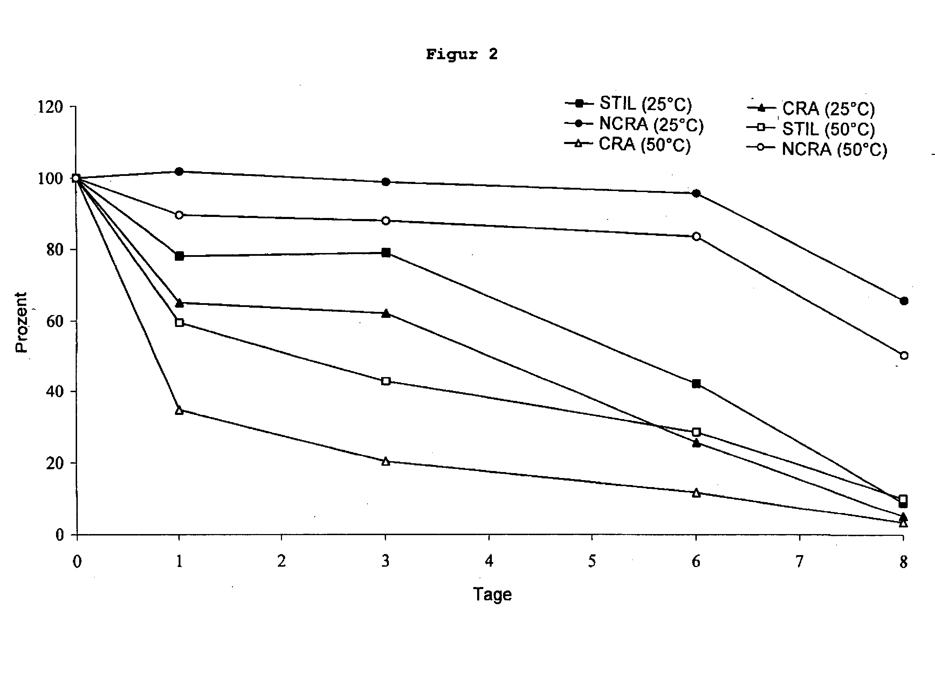

Nachdem gezeigt werden konnte, dass es möglich ist, Linolsäure auch in großstückigem Holz, wie beispielsweise in OSB-Spänen, in einem signifikanten Ausmaß abzubauen, war die Zeit, die für eine komplette Entfernung von Linolsäure benötigt wurde, von Interesse. In den Figuren 1 und 2 wird die Zeit und Temperaturabhängigkeit der oxidativen Entfernung von verschiedenen Komponenten des Holzextraktstoffs gezeigt.

Aus den Figuren 1 und 2 geht hervor, dass für eine nahezu vollständige Entfernung der ungesättigten Komponenten des Holzextraktstoffs bei 25°C acht Tage benötigt werden. Bei 50°C reduziert sich die Reaktionsgeschwindigkeit nach den ersten 24 Stunden. Eine Untersuchung der Enzymaktivität am Ende des Experiments zeigte, dass das Enzym seine Aktivität verloren hatte. Jedoch auch bei 25°C - also bei vorhandener Aktivität des Enzyms - verringerte sich die Reaktionsgeschwindigkeit nach einem Tag und stieg nach dem dritten Tag wieder an. Nach derzeitigem Kenntnisstand liegt der Grund hierfür darin, dass die Autooxidation eine Radikalkettenreaktion ist und dass das Laccase-Mediator-System höchstwahrscheinlich lediglich für die anfänglichen Oxidationsprozesse der ungesättigten Verbindungen verantwortlich ist.

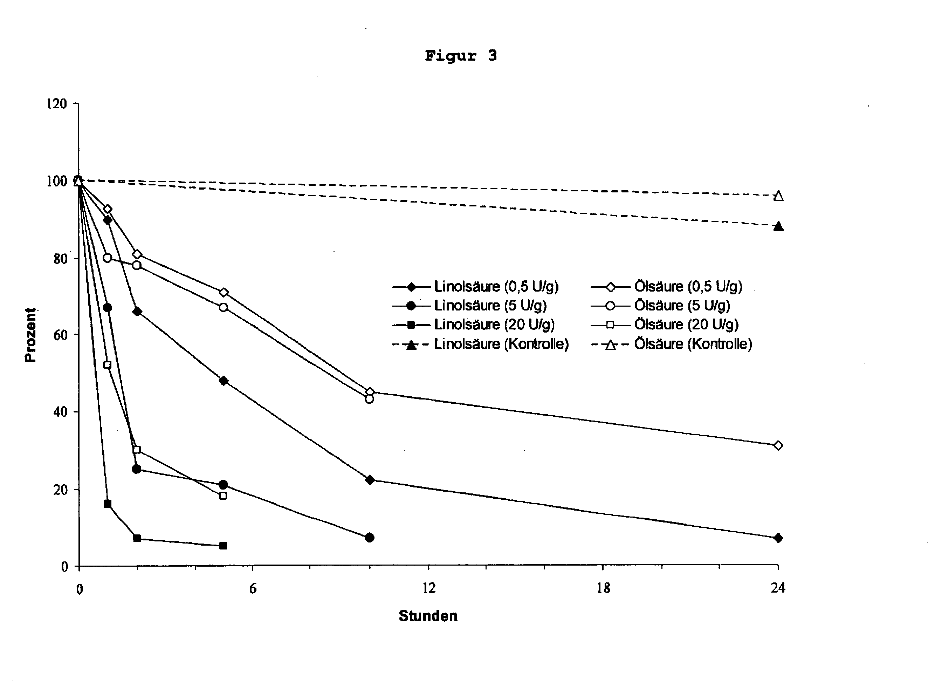

Figur 3 zeigt wie auch die Figuren 1 und 2 den zeitlichen Verlauf des Abbaus von Holzextraktstoffen mit Laccase-HBT, wobei jedoch die Proben nach den in Figur 3 angegebenen Behandlungszeiten noch 15 Minuten bei 200°C getrocknet wurden, um die Trocknung in einem industriellen Trockner zu simulieren. Außerdem wurde zusätzlich zur standardmäßigen Enzymaktivität von 5 U pro Gramm Holz (Ziff. 2.1) auch eine dem Stand der Technik entsprechende, höhere Enzymaktivität (20 U/g) sowie eine sehr geringe Enzymaktivität (0,5 U/g) eingesetzt. Aus Figur 3 geht hervor, dass der Trocknungsschritt bei 200°C eine beträchtliche Steigerung der Abbaueffizienz bewirkte, was wie bereits erwähnt auf einen autokatalytischen Reaktionsmechanimus schließen lässt, da Laccasen üblicherweise schon bei Temperaturen über 70°C rasch inaktiviert werden. VOC-relevante ungesättigte Fettsäuren wurden bereits nach wenigen Stunden nahezu vollständig entfernt, bei der dem Stand der Technik entsprechenden Enzymaktivität bereits nach 1 Stunde. Bemerkenswert ist, dass auch bei sehr geringer Enzymaktivität (0,5 U/g) eine beträchtliche Abbaugeschwindigkeit erzielt werden konnte. Eine geringfügige Abnahme der Fettsäuren ist möglicherweise aufgrund von thermischen Zersetzungsvorgängen während der Trocknung auch ohne Enzym zu beobachten.

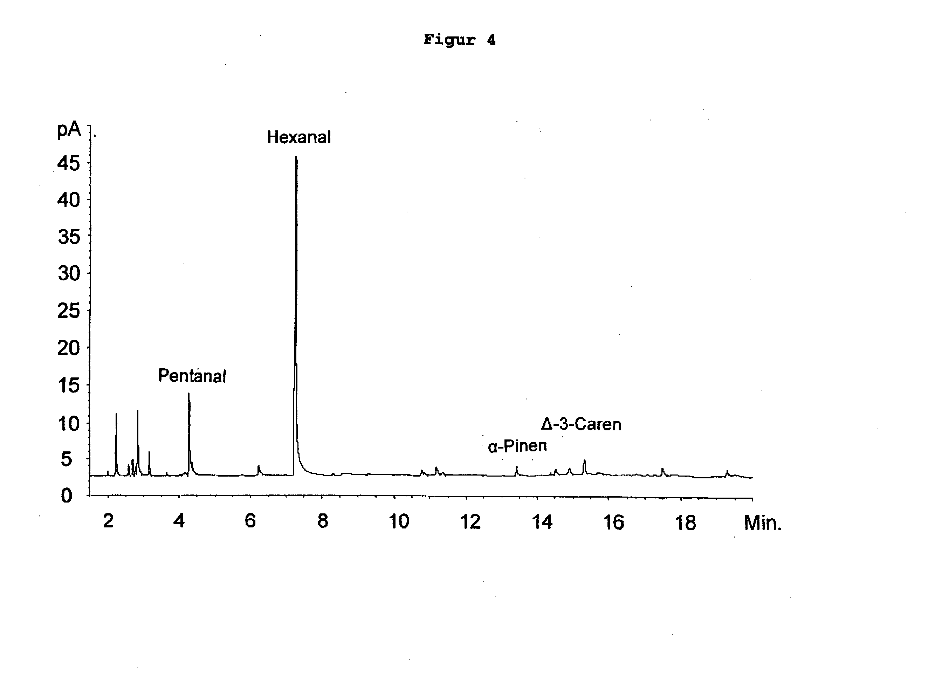

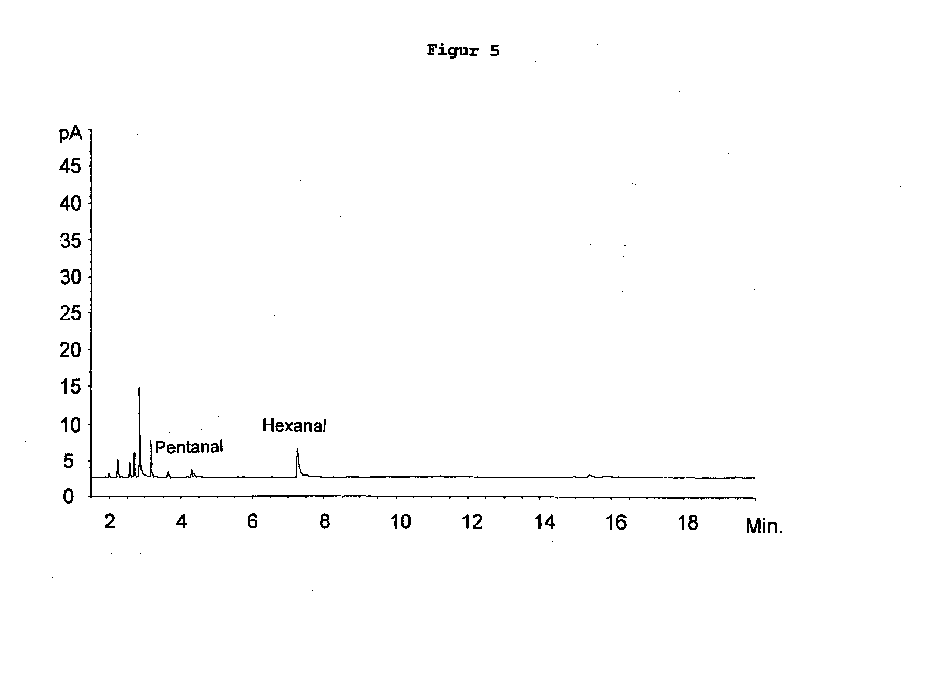

Figuren 4 und 5 zeigen GC Chromatogramme von flüchtigen Verbindungen, die von
- A getrocknetem unbehandelten Holz und
- B getrocknetem Holz, nach 24stündiger Laccase-HBT-Behandlung
freigesetzt wurde. Die Holzproben wurden in einem verschlossenen Glasfläschchen bei 25°C eine Woche lang aufbewahrt und anschließend SPME und GC durchgeführt.

Nach einem Trocknungsschritt, in dem die Trocknung in einem industriellen Trockner simuliert wird, wurden die flüchtigen Verbindungen, die sich im Laufe einer Woche bei 25°C gebildet hatten, über SPME untersucht. Figur 2 zeigt eindeutig, dass der Abbau von Holzextraktstoff mit Laccase-HBT zu einer Verringerung der Menge an flüchtigen Verbindungen führt. Die geringe Menge an kurzkettigen Aldehyden kann der verbleibenden Menge von etwa 40 % Linolsäure zugeordnet werden. Monoterpene sind die üblicherweise am meisten vorkommenden flüchtigen Substanzen in Weichhölzern. Diese wurden nahezu vollständig während des Trocknens entfernt.

## Patentansprüche

1. Verfahren zum Herstellen von Holz und/oder eines Holzwerkstoffs mit einem verringerten Gehalt an Holzextraktstoff und/oder VOC, **dadurch gekennzeichnet, dass** das Holz oder der Holzwerkstoff mit mindestens einem Enzym als Oxidationskatalysator behandelt wird, um eine autokatalytische Oxidationsreaktion zu initiieren.

2. Verfahren nach Anspruch 1, **dadurch gekennzeichnet, dass** der Oxidationskatalysator in einer Menge von 1 x 10⁻⁷ bis 1 Gew.%, bezogen auf die Trockensubstanz des Holzes oder des Holzwerkstoffs, eingesetzt wird.

3. Verfahren nach Anspruch 1 oder 2, **dadurch gekennzeichnet, dass** das Holz oder der Holzwerkstoff mit Enzym in einer Gesamtmenge von 0,001 bis 20 Enzymeinheiten (U), bezogen auf 1 g Trockensubstanz des Holzes oder des Holzwerkstoffs, behandelt wird.

4. Verfahren nach einem der Ansprüche 1 bis 3, **dadurch gekennzeichnet, dass** als Oxidationskatalysator mindestens ein Laccase-Mediatorsystem und/oder mindestens eine Lipoxidase eingesetzt wird.

5. Verfahren nach Anspruch 4, **dadurch gekennzeichnet, dass** als Mediator Violursäure, Ferulasäure (trans-4-Hydroxy-3-methoxyzimtsäure), Homovanillinsäure (4-Hydroxy-3-methoxyphenylessigsäure), Vanillylalkohol (4-Hydroxy-3-methoxybenzylalkohol), TEMPO (2,2,6,6-Tetramethylpiperidin-1-oxyl) und/oder ABTS [2,2-Azino-bis(3-ethylbenzthiazolin-6-sulfonsäure] eingesetzt wird.

6. Verfahren nach Anspruch 4 oder 5, **dadurch gekennzeichnet, dass** die Gesamtmenge an Mediator 0,001 bis 1 Gew.%, bezogen auf die Trockensubstanz des Holzes oder des Holzwerkstoffs, beträgt.

7. Verfahren nach einem der Ansprüche 1 bis 6, **dadurch gekennzeichnet, dass** die Behandlung des Holzes oder des Holzwerkstoffs mit dem Oxidationskatalysator in einem wässrigen Medium durchgeführt wird.

8. Verfahren nach Anspruch 7, **dadurch gekennzeichnet, dass** das wässrige Medium einen pH-Wert von 4 bis 10 aufweist.

9. Verfahren nach Anspruch 7 oder 8, **dadurch gekennzeichnet, dass** die Ausgangsfeuchte des Holzes oder des Holzwerkstoffs auf einen Wert von 10 bis 300 Gew.%, bezogen auf die Trockensubstanz des Holzes oder des Holzwerkstoffs, eingestellt wird.

10. Verfahren nach einem der Ansprüche 7 bis 9, **dadurch gekennzeichnet, dass** das wässrige Medium 0,001 bis 200 U ml⁻¹ Enzym enthält.

11. Verfahren nach einem der Ansprüche 1 bis 10, **dadurch gekennzeichnet, dass** die autokatalytische Oxidation bei einer Temperatur von mehr als 60 °C durchgeführt wird.

12. Verfahren nach einem der Ansprüche 1 bis 11, **dadurch gekennzeichnet, dass** als Holz oder Holzwerkstoff Holzspäne eingesetzt werden.

13. Verfahren nach einem der Ansprüche 1 bis 12, **dadurch gekennzeichnet, dass** nur ein Teil der Oberfläche des Holzes oder des Holzwerkstoffs mit dem Oxidationskatalysator behandelt wird.

14. Holz oder Holzwerkstoff, erhältlich durch ein Verfahren gemäß einem der Ansprüche 1 bis 13.

15. Verwendung eines Enzym-Mediatorsystems zur Herstellung von Holz oder einem Holzwerkstoff mit einem verringerten Gehalt an Holzextraktstoff und/oder VOC.

## Claims

1. Method for the manufacture of wood and/or a wood-based material with a reduced wood extractive and/or VOC content, **characterised in that** the wood or the wood-based material is treated with at least one enzyme that acts as an oxidation catalyst in order to initiate an autocatalytic oxidation reaction.

2. Method according to Claim 1, **characterised in that** the oxidation catalyst is used in a quantity of 1 x 10⁻⁷ to 1 % w/w, relative to the dry matter of the wood or wood-based material.

3. Method according to Claim 1 or 2, **characterised in that** the wood or the wood-based material is treated with enzyme in a total quantity of 0.001 to 20 enzyme units (U), relative to 1 g of dry matter of the wood or wood-based material.

4. Method according to any one of Claims 1 to 3, **characterised in that** at least one laccase mediator system and/or at least one lipoxidase is used as an oxidation catalyst.

5. Method according to Claim 4, **characterised in that** violuric acid, ferulic acid (trans-4-hydroxy-3-methoxycinnamic acid), homovanillinic acid (4-hydroxy-3-methoxyphenylacetic acid), vanillyl alcohol (4-hydroxy-3-methoxybenzyl alcohol), TEMPO (2,2,6,6-tetramethylpiperidine-1-oxyl) and/or ABTS [2,2-azino-bis(3-ethylbenzothiazoline-6-sulphonic acid] is used as a mediator.

6. Method according to Claim 4 or 5, **characterised in that** the total quantity of mediator is 0.001 to 1 % w/w, relative to the dry matter of the wood or wood-based material.

7. Method according to any one of Claims 1 to 6, **characterised in that** the treatment of the wood or wood-based material with the oxidation catalyst is carried out in an aqueous medium.

8. Method according to Claim 7, **characterised in that** the aqueous medium has a pH of 4 to 10.

9. Method according to Claim 7 or 8, **characterised in that** the output moisture of the wood or wood-based material is set at a value of 10 to 300 % w/w, relative to the dry matter of the wood or wood-based material.

10. Method according to any one of Claims 7 to 9, **characterised in that** the aqueous medium contains 0.001 to 200 U ml⁻¹ of enzyme.

11. Method according to any one of Claims 1 to 10, **characterised in that** the autocatalytic oxidation is carried out at a temperature of over 60°C.

12. Method according to any one of Claims 1 to 11, **characterised in that** wood chips are used as the wood or wood-based material.

13. Method according to any one of Claims 1 to 12, **characterised in that** only part of the surface of the wood or the wood-based material is treated with the oxidation catalyst.

14. Wood or wood-based material, obtainable through a method according to one of Claims 1 to 13.

15. Use of an enzyme-based mediator system for the manufacture of wood or a wood-based material with a reduced wood extractive and/or VOC content.

## Revendications

1. Procédé de fabrication de bois et/ou d'un matériau à base de bois ayant une teneur réduite en produits d'extraction de bois et/ou COV, **caractérisé en ce que** le bois ou le matériau à base de bois est traité avec au moins une enzyme en tant que catalyseur d'oxydation afin d'initier une réaction d'oxydation autocatalytique.

2. Procédé selon la revendication 1, **caractérisé en ce que** le catalyseur d'oxydation est utilisé en une quantité de 1 x 10⁻⁷ à 1 % en poids, par rapport à la substance sèche du bois ou du matériau à base de bois.

3. Procédé selon la revendication 1 ou 2, **caractérisé en ce que** le bois ou le matériau à base de bois est traité avec enzyme en une quantité totale de 0,001 à 20 unités d'enzyme (U), par rapport à 1 g de substance sèche du bois ou du matériau à base de bois.

4. Procédé selon l'une quelconque des revendications 1 à 3, **caractérisé en ce qu'**au moins un système médiateur de laccase et/ou au moins une lipoxydase sont utilisés en tant que catalyseur d'oxydation.

5. Procédé selon la revendication 4, **caractérisé en ce que** l'acide violurique, l'acide férulique (acide trans-4-hydroxy-3-méthoxycinnamique), l'acide homovanillique (acide 4-hydroxy-3-méthoxyphénylacétique), l'alcool vanillique (alcool 4-hydroxy-3-méthoxybenzylique), le TEMPO (2,2,6,6-tétraméthylpipéridin-1-oxyle) et/ou l'ABTS [acide 2,2-azino-bis(3-éthylbenzthiazoline-6-sulfonique] sont utilisés en tant que médiateur.

6. Procédé selon la revendication 4 ou 5, **caractérisé en ce que** la quantité totale de médiateur est de 0,001 à 1 % en poids, par rapport à la substance sèche du bois ou du matériau à base de bois.

7. Procédé selon l'une quelconque des revendications 1 à 6, **caractérisé en ce que** le traitement du bois ou du matériau à base de bois avec le catalyseur d'oxydation est réalisé dans un milieu aqueux.

8. Procédé selon la revendication 7, **caractérisé en ce que** le milieu aqueux présente un pH de 4 à 10.

9. Procédé selon la revendication 7 ou 8, **caractérisé en ce que** l'humidité initiale du bois ou du matériau à base de bois est ajustée à une valeur de 10 à 300 % en poids, par rapport à la substance sèche du bois ou du matériau à base de bois.

10. Procédé selon l'une quelconque des revendications 7 à 9, **caractérisé en ce que** le milieu aqueux contient 0,001 à 200 U ml⁻¹ d'enzyme.

11. Procédé selon l'une quelconque des revendications 1 à 10, **caractérisé en ce que** l'oxydation autocatalytique est réalisée à une température supérieure à 60 °C.

12. Procédé selon l'une quelconque des revendications 1 à 11, **caractérisé en ce que** des particules de bois sont utilisées en tant que bois ou matériau à base de bois.

13. Procédé selon l'une quelconque des revendications 1 à 12, **caractérisé en ce que** seule une partie de la surface du bois ou du matériau à base de bois est traitée avec le catalyseur d'oxydation.

14. Bois ou matériau à base de bois, pouvant être obtenu par un procédé selon l'une quelconque des revendications 1 à 13.

15. Utilisation d'un système médiateur d'enzyme pour la fabrication de bois ou d'un matériau à base de bois ayant une teneur réduite en produits d'extraction de bois et/ou COV.
